Europäisches Patentamt

(19) European Patent Office

Office européen des brevets

(11) Publication number: **0 190 628**
**B1**

(12) **EUROPEAN PATENT SPECIFICATION**

(45) Date of publication of patent specification: **07.11.90**

(51) Int. Cl.⁵: **G 01 N 21/21, G 01 N 21/47**

(21) Application number: **86100983.5**

(22) Date of filing: **24.01.86**

(54) Virus identification apparatus and method.

(30) Priority: **08.02.85 US 699890**

(43) Date of publication of application:
**13.08.86 Bulletin 86/33**

(45) Publication of the grant of the patent:
**07.11.90 Bulletin 90/45**

(84) Designated Contracting States:
**DE FR GB IT NL SE**

(56) References cited:
**US-A-4 306 809**

**APPLIED OPTICS, vol. 18, no. 8, 15th April 1979,
pages 1217-1219, Optical Society of America,
New York, US; G.R. BOYER et al.: "Automatic
measurement of the stokes vector of light"**

**APPLIED OPTICS, vol. 19, no. 8, 15th April 1980,
pages 1323-1332, Optical Society of America,
New York, US; R.C. THOMPSON et al.:
"Measurement of polarized light interactions via
the Mueller matrix"**

(73) Proprietor: **THE REGENTS OF THE UNIVERSITY
OF CALIFORNIA
2199 Addison Street
Berkeley California 94720 (US)**

(72) Inventor: **Salzman, Gary C.
108 Sierra Vista Drive
Los Alamos New Mexico 87544 (US)**
Inventor: **Gregg, Charles T.
424 Kiva Los Alamos
New Mexico 87544 (US)**
Inventor: **Grace, Kevin W.
2164-B 33, Los Alamos
New Mexico 87544 (US)**
Inventor: **Hiebert, Richard D.
298 Venado Los Alamos
New Mexico 87544 (US)**

(74) Representative: **Godsill, John Kenneth et al
Haseltine Lake & Co. Hazlitt House 28
Southampton Buildings Chancery Lane
London WC2A 1AT (GB)**

Courier Press, Leamington Spa, England.

**EP  0 190 628  B1**

(56) References cited:
**REVIEW OF SCIENTIFIC INSTRUMENTS, vol. 44,
no. 12, December 1973, pages 1753-1762, The
American Institute of Physics, New York, US;
A.J. HUNT et al.: "A new polarization-
modulated light scattering instrument"**

## Description

The present invention relates generally to particle sorting and identification and more particularly to the use of light scattering to identify biological particles, e.g. viruses, in static suspensions. This invention is the result of a contract with the Department of Energy (Contract No. W-7405-ENG-36).

The rapid identification of microorganisms such as viruses is of obvious importance in clinical medicine and has been greatly enhanced in recent years. The development of chemiluminescent and enzyme-linked immunoabsorbant assays for the rapid identification of viruses has reduced identification time to 2—4 hours in the most favourable cases. However, identification of microorganisms requires that the cells be isolated and grown in reasonably pure cultures, a process which can take from 16 hours, again in favourable cases, to several weeks. Thus, despite advances in the availability of automated viral identification systems, viral identification still requires on the order of 24 hours since pure cultures must be grown for the current procedures to be used.

A virus is a tiny biological particle whose DNA or RNA exists as an oriented helix which is almost crystalline in nature inside the nucleocapsoid. Because of this, such biological macromolecules are asymmetric structures and interact differently with left and right circularly polarized light. Circular intensity differential scattering, which is the differential scattering of left and right circularly polarized light, probes the higher order structure (structure other than the shape of the scattering species) of macromolecular aggregates, and is sensitive to the orientation of such helices relative to the direction of polarization of the incident electromagnetic radiation. The circular intensity differential scattering signal is the amount of light scattered when the incident beam is left circularly polarized minus that scattered when the incident beam is right circularly polarized, divided by the total amount of light scattered by the object virus. Since the circularly polarized light differentially scattered from a helix into a detector is sensitive to the orientation of the helix with respect to the direction of polarization of the incident light beam, and would be different for different orientations of a single virus, it is desirable to measure the circular intensity differentially scattered signal as well as any other polarization sensitive signals from suspensions of the virus of interest. The viruses in a suspension are randomly oriented so that the scattering signals derived therefrom represent a spatial average for all of the virus particles in the path of the light beam. It is fortuitous that, according to clinical virologists a clinical virus specimen contains but a single virus type in most of the cases studied.

The circular intensity differential scattering signal can be related to one element of a 4×4 matrix called the Mueller matrix which describes the scattering of light from an object at a particular angle and wavelength. All of the information in a beam of electromagnetic radiation is contained in a four element vector called the Stokes vector (I, Q, U, V). I is the intensity of the light in a beam of radiation and is customarily normalized to unity. Q, U and V describe the polarization properties of the light beam. Q is the tendency toward horizontal linear polarization. Its value is $+1$ for horizontal linearly polarized light and $-1$ for vertical linearly polarized light. U is the tendency toward linearly polarized light tilted at $+45°$ to the horizontal scattering plane. It has values ranging from $+1$ ($+45°$) to $-1$ ($-45°$). V is the tendency toward right circular polarization. For a right circularly polarized beam, $V=+1$ and for a left circularly polarized beam, $V=-1$. There are ten independent matrix elements which can be determined from the scattering experiments which characterize the scattering particle. Moreover, by utilizing scattering angle and radiation wavelength dependence of the ten parameters, it should be possible to uniquely characterize microorganisms for rapid and positive identification.

According to one aspect, the invention relates to apparatus of the kind described in "Polarized Light Scattering for Biological Systems: a Technique for Cell Differentiation", W. E. Bickel and M. E. Stafford—J. Biol. Phys. *9*, 53 (1981) and comprising an apparatus for obtaining values characteristic of a homogeneous sample of biological particles in static fluid suspension comprising:

a) means for producing collimated, high intensity substantially monochromatic radiation having a chosen wavelength and having substantial polarization along a first axis;

b) a modulator for receiving said linearly polarized radiation and generating polarization modulated radiation having a first frequency;

c) means for receiving the sample, permitting the said modulated radiation to enter and interact therewith, and permitting the radiation scattered thereby to emerge, said modulator being the only modulator upstream of said receiving means;

d) a polarizer for receiving said scattered radiation and interacting therewith to pass a component of said scattered radiation having its polarization directed along a second axis;

e) means for quantitatively detecting said radiation passed by said polarizer; and

f) means for processing the detected radiation to provide values each having a definite mathematical relationship substantially to a particular Mueller matrix element, said elements deriving from the interaction of the sample with the radiation and, when normalised by the intensity of the scattered radiation, containing information relating to the nature of the sample.

W. E. Bickel and M. E. Stafford describe the measurement of scattered light from biological systems, such as bacteria etc. to yield optical data which can differentiate between species, strains, surface characteristics, etc.. In particular they illustrate how such a method can be used as a means for differentiating different types of bacteria. The authors disclose that the ten independent Mueller matrix elements or linear combinations thereof may be determined by combining scattering measurements involving the three possible polarization orientations of input radiation and the three polarization orientations of the scattered radiation plus a measurement of the total intensity. Polarization measurements of the type suggested therein require several different experimental arrangements involving different optical elements and are therefore tedious and time-consuming to achieve.

According to an aspect of the invention, the apparatus is characterised in that the modulator has a retardance between 1/4 wavelength and 1/2 wavelength of the received radiation, is operable to generate elliptically polarized radiation, a second modulator is provided, having a retardance between 1/4 wavelength and 1/2 wavelength of the emitted radiation from the sample, for receiving a portion of said emerging scattered radiation at a chosen angle and for generating polarization modulation radiation therefrom which has a second modulation frequency simultaneously impressed thereon, the second modulator being the only modulator downstream of the receiving means; the polarizer is arranged to receive scattered radiation bearing the two polarization modulation frequencies; said first and second retardances and said first and second axes are such that the dc component of the intensity of the scattered radiation is independent of polarization in order that a normalization of the scattered radiation can be achieved; the quantitative detection means being sensitive to each individual frequency of a plurality of frequencies present in said radiation passed by the polarizer, said individual frequencies resulting from the effects of the two modulators on the radiation; and the means for processing comprising means for processing each individual frequency of said plurality of frequencies present in said quantitatively detected radiation, to extract eight independent matrix elements.

In a preferred embodiment of the invention, the first and second polarization modulators include photoelastic modulators. It is also preferred that the first and second retardances are 2.40483 radians. A quarter-wave plate can be inserted between the means for holding the sample and the second polarization modulator if the $S_{23}$ and $S_{32}$ Mueller matrix elements are to be measured. The scattered radiation passes therethrough and interacts therewith to provide additional information, thus giving a total of ten independent matrix elements.

Thus, such an apparatus needs only two configurations of a single experimental apparatus to accomplish the requisite measurements. Bickel et al. describe only one apparatus; one which uses quarter-wave plate retarders for the incident and analyzer optics, and which is therefore only capable of determining linear combinations of Mueller matrix elements with their inherent loss of significant information.

According to another embodiment of the invention, measurements can be repeated at different scattering angles and interrogating radiation wavelengths to provide additional information about the sample. Preferably, a correction for the birefringence of any container holding the sample is made according to the description provided hereinbelow. In a possible identification procedure for an unknown sample, the measured Mueller matrix elements as a function of scattering angle and wavelength are compared with a database comprising many such measurements recorded for known samples.

A useful summary of the theoretical background which is relevant to the subject invention may be found in "Measurement of Polarized Light Interactions via the Mueller Matrix," by Randall C. Thompson, Jerold R. Bottiger, and Edward S. Fry, Applied Optics 19, 1323 (1980). Thompson et al. describe a four-modulator photopolarimeter capable of directly and simultaneously determining all sixteen Mueller matrix elements with a single apparatus utilizing light scattering measurements. Of particular importance in this reference is the implication that the use of smaller numbers of polarization modulators permits only the measurement of combinations of matrix elements. Thompson et al. therefore teach away from the present invention which uses two polarization modulators. It should be mentioned at this point that the use of four polarization modulators severely reduces the signal-to-noise ratio of the observed intensities over that for the two modulator configuration. Here the "signal" is the amplitude of the desired frequency component and "noise" is the amplitude of all undesired components. Also of importance in this reference is the choice of the retardance amplitude of 2.40483 radians which makes $J_o(\delta)=0$. This removes the dc term from the expansion expressions for the Mueller matrix elements, and renders the dc component of $I_f$ proportional only to the 11 matrix element. The use of only two polarization modulators in two configurations according to the teachings of the present invention to achieve a similar result to hhat obtained by Thompson et al. with the use of four modulators derives from the fortuitous circumstance that the higher order Bessel function terms appearing in the expressions for the Mueller matrix elements decrease sufficiently rapidly, to permit the desired unique modulation frequency dependence for each Mueller matrix element to be possible as is the case for Thompson et al.

In embodiments of the present invention, the Stokes vectors of the incident and scattered light are manipulated by a series of optical elements, each represented by a 4×4 Mueller matrix, in order that the intensity component of this vector, $I_f$, for the scattered radiation is made to develop information about the scattering sample which can be extracted by appropriate signal processing.

It is to be stressed that embodiments of the present invention permit independent determination of ten parameters for a particular wavelength and scattering angle. In all of the references listed below, linear combinations of Mueller matrix elements are obtained. Except for the most fortuitous situations, the number of independent pieces of information which can be derived from such linear combinations is far smaller than the number available, thereby reducing the information available uniquely to characterize the particles. Linear combinations contain contributions from terms in the Mueller matrix which have nonzero values for optically inactive particles, such terms having their origin in the size and shape of the particle itself and not in the genetic composition of the particle.

Difficulties in analysis exist for measurements of linear combinations of the Mueller matrix elements. US 4306809 (Azzam) also discloses apparatus of the kind disclosed in the Bickel et al. document. However, the resulting scattered signal is Fourier analysed by reducing the signal to twenty-five separate amplitudes from which the sixteen Mueller matrix elements are calculated. In such Fourier analysis of scattering data, since the Fourier series is often truncated after the twelfth term, the last few terms, for example, the eighth through twelfth terms, must be approaching zero rapidly in order for the truncation of the series to have meaning. Therefore, to extract several of the Mueller matrix elements, sums and differences of extremely small measurements having noise superimposed thereon must be taken. Since these numbers have decreasing signal-to-noise ratio, the matrix elements derived therefrom are unreliable. Embodiments of the present invention substantially avoid this difficulty, without restricting the modulation frequencies of the two required retarders to have a ratio of exactly five to one, as disclosed in US 4306809, in order that simplifications occur in the Fourier transform mathematics.

"Automatic measurement of the Stokes Vector of light"—G. R. Boyer, B. F. Larnouroux and B. S. Prade, Applied Optics 18, No. 8 (1979) describes a system in which the Stokes parameters of light are measured automatically over a wide range of wavelengths. The apparatus requires two piezo-optic modulators, three lock-in amplifiers and an on-line mini-computer for data processing. The aim of the system is to improve the accuracy of results by replacing static retardation phase plates by piezo-optical birefringence modulators. Four separate measurements of the four components of the Stokes vector are taken from which the Mueller matrix is obtained.

The following documents provide further background information on the invention:

"Suspended Organic Particles Monitor Using Circularly Polarized Light"—John W. Liskowitz US Patent No. 3,612,688; and

"Testing of Optically Active Substance by Polarized Radiation"—L. D. Barron and A. & D. Buckingham, US Patent No. 3,817,634.

According to a further aspect of the present invention there is provided a method for obtaining values characteristic of a homogeneous sample of biological particles in static fluid suspension comprising the steps of:

a) producing collimated, high intensity substantially monochromatic radiation having a chosen wavelength and having substantial polarization along a first axis;

b) modulating said linearly polarized radiation to generate polarization modulated radiation having a first frequency;

c) permitting said modulated radiation to enter and interact with the sample to produce scattered radiation, said modulation step being the only modulation step before interaction with the sample;

d) polarizing said scattered radiation to produce a component of said scattered radiation having its polarization directed along a second axis;

e) quantitatively detecting said polarized scattered radiation;

f) processing the detected radiation to provide values each having a definite mathematical relationship substantially to a particular Mueller matrix element, said elements deriving from the interactions of the sample with the radiation and when said elements are normalised by the intensity of the scattered radiation, containing information relating to the nature of the sample; characterised in that:

the modulation step includes retarding the received radiation, between 1/4 wavelength and 1/2 wavelength, and generating elliptically polarized radiation;

a second modulation step is provided, including retarding the emitted radiation from the sample by between 1/4 wavelength and 1/2 wavelength and receiving a portion of said scattered radiation at a chosen angle and generating polarization modulation radiation having second modulation frequency simultaneously impressed thereon, the second modulation step being the only such step after interaction with the sample;

the polarizing step polarizes the scattered radiation bearing the two polarization modulation frequencies;

normalizing the scattered radiation is achieved by fixing the retarding steps and the first and second axis such that the dc component of the scattered radiation is independent of polarization;

the quantitative detection step detects each individual frequency of a plurality of frequencies present in said radiation, said individual frequencies resulting from the effects of the two modulation steps on the radiation; and

the processing step processes each individual frequency of said plurality of frequencies present in said quantitatively detected radiation, providing eight independent matrix elements to be extracted.

For a better understanding of the invention reference will now be made by way of example to the accompanying drawings wherein:

Figure 1 shows a schematic representation of the apparatus of the present invention in its most elementary form;

Figure 2 shows a schematic representation of the detection and measurement portion of the apparatus of Figure 1 in the configuration used to determine the $S_{14}$ and $S_{34}$ Mueller matrix elements;

Figure 3 shows the frequency dependence of the elements of the Mueller matrix for a particular choice of polarization modulator retardances and azimuthal angles for the passing axes of the polarizers and the fast axes of the polarization modulators;

Figure 4 is a graph of $S_{14}$ as a function of scattering angle at 360 nm for four classes of encephalitis virus vaccines; and

Figure 5 is a graph of $S_{14}$ as a function of scattering angle at 360 nm for four classes of dengue fever virus vaccines.

The Mueller matrix is a $4 \times 4$ matrix which describes the polarization sensitive transformation of an incident beam of light into a scattered beam of light by a scattering object such as a virus or suspension of virus particles. Much information concerning the internal structure and shape can be derived about the scattering particles from the simultaneous determination of multiple Mueller matrix elements at specific wavelengths and scattering angles, enough information in many cases to enable discrimination among a wide variety of different viruses of clinical significance. Measurement of a sufficient number of polarization related phenomena to extract the ten independent Mueller matrix elements would be a formidable task involving many experimental configurations and difficult measurements. The present invention overcomes this difficulty by permitting all of the relevant information to be derived from the measurement of a single intensity using a single apparatus.

By defining the polarization of the radiation incident on the virus sample to be elliptical polarization, choosing the retardances properly, and modulating this polarization before and after its interaction with the virus sample, one can achieve the encoding of the viral information contained in the Mueller matrix in the frequency dependence of the radiation intensity emerging from the viral sample and its attendant optical system. That is, the intensity can be manipulated to closely approximate the form

$$I(\theta,\lambda,f_{ij})=\Sigma_{ij}a(f_{ij})S_{ij}(\theta,\lambda),$$

where $\theta$ and $\lambda$ are the scattering angle and the wavelength of the radiation, respectively, the $f_{ij}$ are the linear combinations of the two applied polarization modulation frequencies, $S_{ij}(\theta,\lambda)$ are the Mueller matrix elements, and $a(f_{ij})$ are combinations of trigonometric functions each having a unique frequency, $f_{ij}$, associated with it. It is an important element of the present invention that a series of measurements of the intensity at each of the frequencies, $f_{ij}$, permits the extraction of the individual Mueller matrix elements. That is,

$$S_{ij}(\theta,\lambda)=I(\theta,\lambda,f_{ij})/a(f_{ij}),$$

for each distinct combination $f_{ij}$. Lock-in amplifiers are used to detect the typically small signals at each frequency. Requirements for the intensity of the interrogating radiation are quite modest since the measurements are performed in small cuvettes containing the virus suspension, with no particular time limitations. The measurement procedure is as follows: The clinical specimen is filtered or otherwise prepared so that the small liquid volume remaining contains only virus size particles. The sample is then placed in a cuvette and placed in the path of the interrogating beam which has been suitably prepared as to its polarization. A reference frequency generator is sequentially switched by a computer to the first of eight reference frequencies, each frequency corresponding to a particular Mueller matrix element, and a scattered light intensity measurement made by using a lock-in amplifier tuned to each reference frequency in turn. Measurements are made with a 1 to 3 second time constant, but longer or shorter integration times are possible if the virus concentration is low. The signal corresponding to each selected Mueller matrix element is digitized and compared with Mueller matrix elements previously stored in a database in order to determine the identity of the suspended virus sample under investigation. By performing the measurements in this manner, difficult polarization measurements are avoided, and the individual matrix elements emerge without the need for solving systems of equations with diminutive terms. As mentioned hereinabove, Thompson et al. achieve a similar result, but require the use of four polarization modulation frequencies. According to the present invention, eight Mueller matrix elements can be determined for each of two choices of the azimuthal angles for the polarizer passing axes and polarization modulator fast axes. Adjustment of the present apparatus from one set of chosen azimuthal angles to the other does not require any substitution of components but only simple adjustments to the components in place. As will be described hereinbelow, the measurement of the $S_{32}$ and $S_{23}$ matrix elements require the insertion of a quarter-wave plate between the sample and the second polarization modulator.

It should be mentioned that the present invention cannot be used for the identification of bacteria if present in a heterogeneous population. For heterogeneous populations of bacteria, what is required is a flow cytometer in which the bacteria are analyzed one-at-a-time as they pass through the focused incident light beam. The DNA in a bacterium is organized in supercoils which are randomly oriented in space. As a result a detector in the flow cytometer would observe the same differential scattering signal regardless of the orientation of the bacterium. Viruses, as oriented particles, cannot readily be analyzed with this method. Homogeneous populations of bacteria can be identified in the manner of the invention.

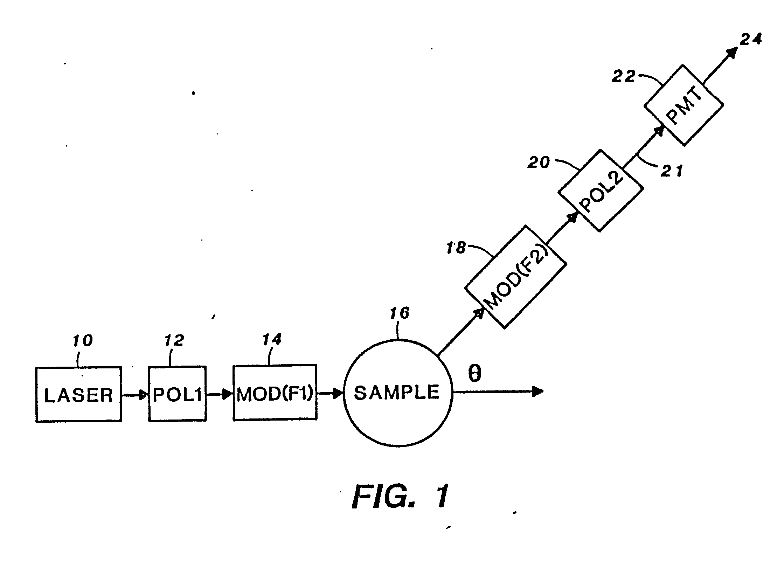

Turning now to the drawings, Figure 1 is a schematic representation of the apparatus of the present invention in its most basic form. Substantially monochromatic light from a light source such as a laser *10* (argon ion laser operating at between 50 and 250 mW output power) is directed into a first polarizer *12* to insure that a substantial fraction of the transmitted radiation is linearly polarized at a specific angle with respect to the horizontal scattering plane. The emerging beam is then directed to a photoelastic modulator *14* operating at 50 kHz wherein the radiation is elliptically polarized with its handedness alternating left and right at 50 kHz. The radiation emerging from the polarization modulator is then made incident on the sample *16* held in a cylindrical quartz cuvette 50 mm in diameter with 2 mm thick walls. The incident intensity is not modulated by these optical elements. Transmitted radiation is directed into a Rayleigh horn (not shown) to minimize stray scattered light.

The scattered light analyzing and detecting components of the present apparatus are mounted on a computer-controlled rotary stage. The scattering angle, $\theta$, in the horizontal plane is defined relative to the incident radiation, and the acceptance half-angle for the analyzing and detecting components was about 0.5°. Scattered radiation to be observed at a particular scattering angle is passed through a second photoelastic modulator *18* which was operated at 47 kHz, and then directed into a second linear polarizer *20*. The emerging light *21* is passed through a wavelength filter (not shown) to remove satellite laser wavelengths and made to impinge on a detector *22* sensitive to the wavelength employed. As will be described in Example II hereinbelow, if direct measurements of the $S_{23}$ or $S_{32}$ Mueller matrix elements are desired, a quarter-wave plate (not shown) may be inserted between the sample cuvette and the second photoelastic modulator *18*. The retardances of the two modulators *14, 18* were selected to be 2.4048 radians in order to render the total scattered intensity, which is used to normalize the other Mueller matrix elements, independent of the polarization of the scattered light. With the use of two modulators, eight of the Mueller matrix elements can be measured simultaneously; this number being all of the independent matrix elements measurable by any scattering experiments since the remaining matrix elements are derivable therefrom. The two modulation frequencies produce intensity modulation at the photomultiplier tube at several frequencies which are linear combinations of the two input frequencies.

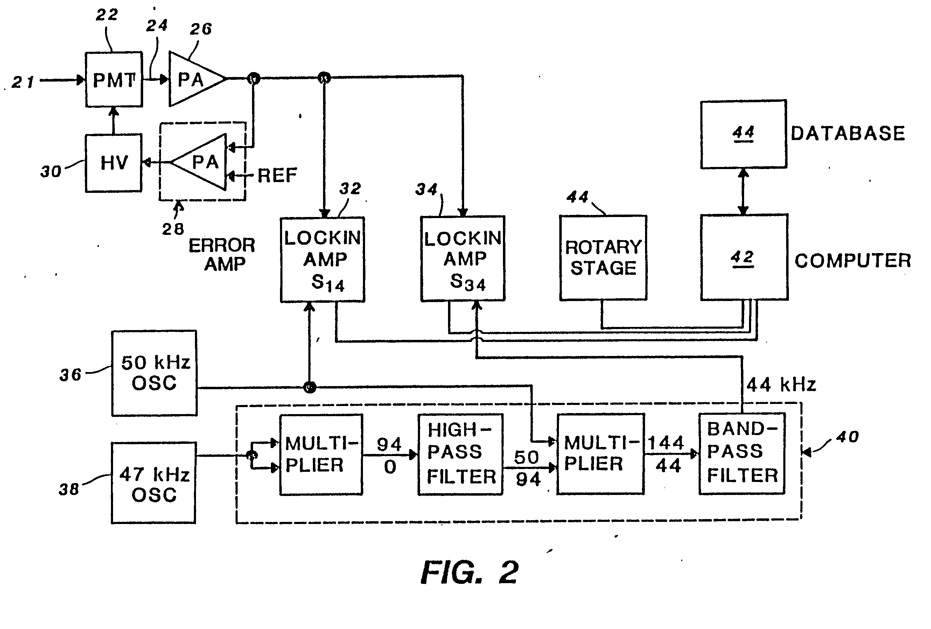

Figure 2 shows a block diagram of the electronic circuitry used for measuring $S_{14}$ and $S_{34}$ Mueller matrix elements. Photomultiplier tube *22* is powered by a high voltage power supply *30*. Power amplifier *26* both increases the amplitude of the signal *24* from the photomultiplier in order to drive the lock-in amplifiers *32, 34*, and is part of a feedback loop *26, 28, 30* for maintaining the anode current of the photomultiplier constant by controlling the high voltage bias on the photomultiplier tube as the scattering angle is changed. This effectively normalizes all of the matrix elements to the total scattered intensity. Computer *42* drives a rotary stage *44* which changes the scattering angle observed by the analyzing optics, receives the signals generated by the lock-in amplifiers (only two signals in the situation described), and compares the normalized results with those stored in database *44* in order to identify the virus in the suspension. An oscillator *36* operating at 50 kHz provides the reference frequency for one lock-in amplifier *32*, while a second oscillator *38* operating at 47 kHz drives a frequency multiplier/filter chain *40* which provides a 44 kHz reference frequency to the second phase lock-in amplifier. The choice of this reference frequency will become apparent in the discussion which follows. It should be mentioned at this point that the number of lock-in amplifiers employed is a function of the number of desired independent Mueller matrix elements. That is, since each Mueller matrix element occurs at a distinct frequency and each lock-in amplifier is electrically referenced to a single frequency, the simultaneous measurement of eight Mueller matrix elements for a chosen set of polarizer passing axes and polarization modulator fast axes will require eight phase-sensitive detectors. Determination of the Mueller matrix elements as a function of wavelength and scattering angle for many viral suspensions will provide a database from which unknown viral suspensions will be able to be compared in order to quickly identify the unknown viral sample.

Having generally described the invention, the following specific examples are given as a further illustration thereof.

Example I

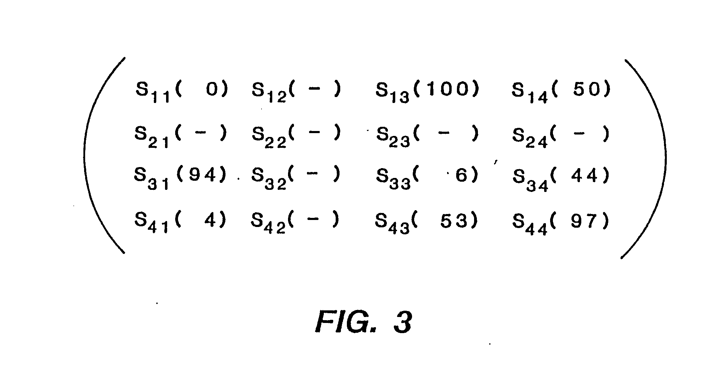

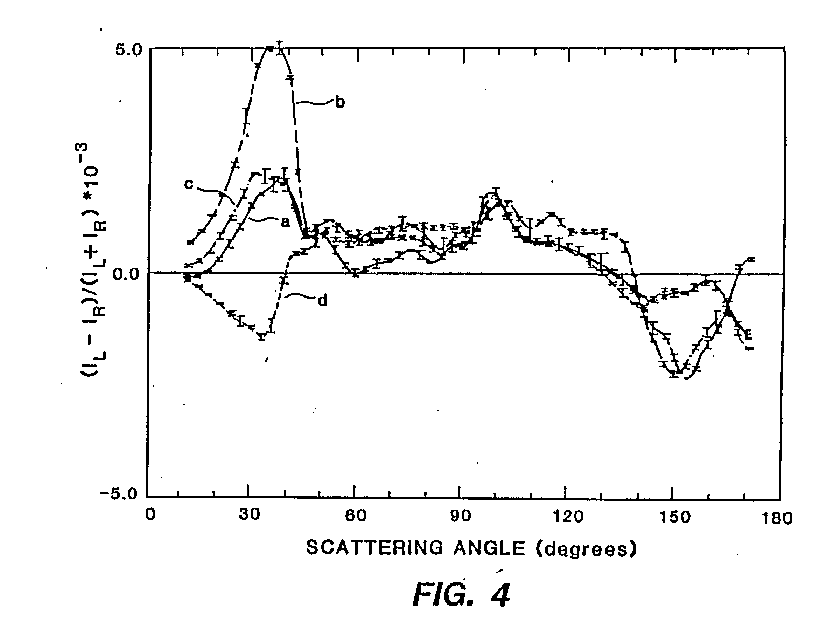

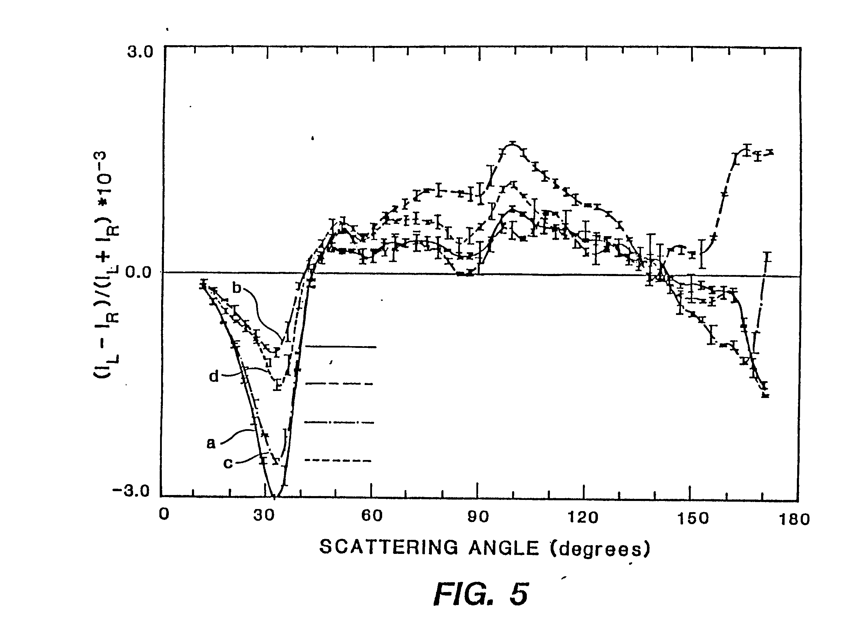

If the azimuthal angle, $\gamma$, is defined as being positive in a clockwise manner measured from the horizontal scattering plane in which the scattering angle $\theta$ is defined and looking into the beam of radiation incident on the sample under investigation, and the azimuthal angle of the passing axis of each of the polarizers is +45° while that for the fast axis for each of the polarization modulators is +90°, the measurable matrix elements of the Mueller matrix are shown in Figure 3. The numbers in parentheses are the frequencies in kilohertz at which each matrix element is determined. The dashes in some of the parentheses indicate that there is no contribution from that particular matrix element. With the polarizer passing axes set at +90°, and the modulator fast axes set at +45°, however, row 3 and column 3 are missing. $S_{11}$ is the total scattering intensity and appears as a dc component at zero frequency. $S_{14}$ is the circular intensity differential scattering term, $I_L - I_R$, and appears at 50 kHz. The other polarization sensitive element of particular interest is $S_{34}$ which appears at 44 kHz. With row 3 and column 3 missing instead of row 2 and column 2. $S_{24}$ appears at 44 kHz instead of $S_{34}$. The results for several virus vaccines are shown in Figures 4 and 5. Figure 4 shows plots of $S_{14}$ for four types of encephalitis virus vaccines as a function of scattering angle at 360 nm. The plot for VEE (TC-83) is denoted by "a", "b" is the plot for SLE (TBH-28), "c" is the plot for WEE (Fleming) and "d" is the plot for EEE. Figure 5 shows plots of $S_{14}$ for four types of dengue fever virus vaccines as a function of scattering angle at 360 nm. As in Figure 4, the four viral types are readily distinguishable at 30° scattering angle within the experimental variation indicated by the error bars. The plot for Dengue Type 1 (Hawaii) is denoted by "a", "b" is the plot for Dengue Type 2 (New Guinea), "c" is the plot for Dengue Type 3 (H879), and "d" is the plot for Dengue Type 4 (H24L). The St. Louis Encephalitis Virus is difficult to distinguish from Dengue Fever Virus serologically. The circular intensity differential scattering spectra for the vaccine preparations are, however, very different. Clearly, to obtain additional information about each virus, especially those which have similar scattering angle or wavelength plots for particular matrix element, other Mueller matrix elements would be measured.

Each of the Mueller matrix elements is calibrated by rotating the detector to 0° scattering angle and replacing the sample cuvette with various combinations of optical elements whose Mueller matrices are known. For example, $S_{14}$ and $S_{34}$ are calibrated by inserting a 488 nm quarter-wave plate with its fast axis at 0° followed by a polarizer. The polarizer is rotated in steps through azimuthal angles ranging from 0° to 180°. $S_{14}$ behaves as the sine of twice the azimuthal angle and $S_{34}$ behaves as the sine squared of twice the azimuthal angle. The lock-in amplifier gain corrections for $S_{14}$ and $S_{34}$ can thereby be determined and stored in the computer for use in obtaining a set of Mueller matrix elements which is representative of a particular virus. A similar procedure is followed for the remaining matrix elements. These calibrations also enable the determination of the correct phase offsets between the reference and signal waveforms.

Example II

Example I describes the extraction of fourteen out of the sixteen Mueller matrix elements in two measurements of eight matrix elements each, ten of which are independent. The additional matrix elements might be useful for investigating the measurement precision but could be obtained by appropriate combinations of the measured elements. In this regard, the $S_{23}$ and $S_{32}$ matrix elements, which cannot be obtained in the manner described hereinabove, are extracted according to the following procedure if these elements are desired:

With the azimuthal angle, γ, of the passing axis for each of the first and second polarizers is set at 90°, the fast axis of each of the first and second polarization modulator set at 45°, and that for the elements *21, 41, 12, 22, 42, 14, 24* and *44* are determined, as described in Example I and will hereinafter be designated as I configuration. Moreover, if the azimuthal angle for the passing axis for each of the polarizers is 45°, and that for the fast axis for each of the polarization modulators is 90°, the matrix elements *31, 41, 13, 33, 43, 14, 34, 44* are determined, which will hereinafter be designated as configuration II. If a quarter-wave plate having its fast axis oriented at 0° azimuthal angle is inserted between the sample cuvette and the second polarization modulator, and if the remaining azimuthal angles are arranged according to configuration I, matrix elements *21, 31, 12, 22, 32, 14, 24* and *34*, can be determined. Similarly, if the azimuthal angle of the fast axis of the quarter-wave plate is set at 45° while the remaining azimuthal angles are arranged according to configuration II, matrix elements *21, 31, 13, 23, 33, 14, 24* and *34* can be determined. It should be mentioned at this point that $S_{11}$, the polarization independent scattered intensity related matrix element is always determined if anything at all is to be measured.

Ideally, the cuvette should exhibit no strain birefringence at either the light input or output locations. A strain of less than 10 nm of retardance at a specified wavelength per centimeter of cuvette light transmitting material is considered strain free in the optics industry. $S_{14}$ is affected only by strain at the input location, while $S_{34}$ is affected equally by strain at both the input and output locations. Strain at the input location causes $S_{12}$ and $S_{13}$ to have contributions at the same frequency as that for $S_{14}$. Since $S_{12}$ can be as large as $-1$ (at 90° scattering angle), this represents a potentially severe problem for extracting independent Mueller matrix elements. Modeling studies indicate, however, that for cuvette input light transmitting material strains as large as 24.4 nm/cm, an $S_{12}$ value of $-0.5$, and an $S_{14}$ value of 0.001, the contribution at 50 kHz from $S_{14}$ is twice as large as that from $S_{12}$, and the $S_{12}$ contribution does not change as the $S_{14}$ value varies over a wide range. This calculation was performed for the situation where the azimuthal angle for the passing axis of each of the polarizers was $+45°$, that for the fast axis for each of the polarization modulators was $+90°$, and the fast axis for the strain was $+45°$ with respect to the horizontal scattering plane. The modeling calculations also indicate that if a set of measurements is performed for both choices of azimuthal angle described hereinabove, the degree of strain and the orientation of its fast axis at each of the input and output locations will be able to be determined. Once these four numbers are determined, each Mueller matrix element can be appropriately corrected. That is, the two chosen azimuthal angle configurations can give rise to fourteen pieces of information: ten independent Mueller matrix elements, and the four required degree of strain parameters.

The foregoing description of the preferred embodiment of the invention has been presented for purposes of illustration and description. It is not intended to be exhaustive or to limit the invention to the precise form disclosed, and obviously many modifications and variations are possible in light of the above teaching. The embodiment was chosen and described in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. An apparatus for obtaining values characteristic of a homogeneous sample of biological particles in static fluid suspension comprising:

a) means (10, 12) for producing collimated, high intensity substantially monochromatic radiation having a chosen wavelength and having substantial polarization along a first axis;

b) a modulator (14) for receiving said linearly polarized radiation and generating polarization modulated radiation having a first frequency;

c) means (16) for receiving the sample, permitting the said modulated radiation to enter and interact therewith, and permitting the radiation scattered thereby to emerge, said modulator being the only modulator upstream of said receiving means;

d) a polarizer (20) for receiving said scattered radiation and interacting therewith to pass a component of said scattered radiation having its polarization directed along a second axis;

e) means (22) for quantitatively detecting said radiation passed by said polarizer (20);

f) means for processing the detected radiation to provide values each having a definite mathematical relationship substantially to a particular Mueller matrix element, said elements deriving from the interaction of the sample with the radiation and, when said elements are normalised by the intensity of the scattered radiation, containing information relating to the nature of the sample; characterised in that:

the modulator (14) has a retardance between 1/4 wavelength and 1/2 wavelength of the received radiation, is operable to generate elliptically polarized radiation;

a second modulator (18) is provided, having a retardance between 1/4 wavelength and 1/2 wavelength of the emitted radiation from the sample, for receiving a portion of said emerging scattered radiation at a chosen angle and for generating polarization modulation radiation therefrom which has a second modulation frequency simultaneously impressed thereon, the second modulator (18) being the only modulator downstream of the receiving means (16); the polarizer (20) is arranged to receive scattered radiation bearing the two polarization modulation frequencies;

said first and second retardances and said first and second axes are such that the dc component of the intensity of the scattered radiation is independent of polarization in order that a normalization of the scattered radiation can be achieved;

the quantitative detection means (22) being sensitive to each individual frequency of a plurality of frequencies present in said radiation passed by the polarizer (20), said individual frequencies resulting from the effects of the two modulators (14, 18) on the radiation; and

the means for processing comprising means for processing each invididual frequency of said plurality of frequencies present in said quantitatively detected radiation, to extract eight independent matrix elements.

2. The apparatus as claimed in Claim 1 wherein the means for producing the polarised monochromatic radiation comprises a laser.

3. The apparatus as claimed in Claim 1 where the means for producing the polarised monochromatic radiation comprise a monochromatic radiation source in conjunction with a polarizer.

4. The apparatus as claimed in Claim 2 or 3 wherein a quarter-wave plate is inserted between said means for receiving the sample and said second modulator, whereby said emerging scattered radiation passes therethrough and interacts therewith before entering said second modulator, thereby permitting the measurement of the $S_{23}$ and $S_{32}$ Mueller matrix elements to be made.

5. The apparatus as claimed in Claim 1, 2, 3 or 4, wherein the first mentioned modulator (14) and said second modulator include photoelastic modulators, said photoelastic modulators having sinusoidally varying retardance amplitudes at said first frequency and said second frequency, respectively.

6. The apparatus as claimed in Claim 1, 2, 3, 4 or 5 wherein said first retardance and said second retardance are each chosen to be 2.40483 radians.

7. The apparatus as claimed in any one of Claims 1 to 6 wherein said means for identifying and measuring the intensity associated with each of said invididual frequency of said plurality of frequencies includes at least one phase-sensitive detector, said at least one phase-sensitive detector being tunable in turn to each of said invididual frequencies and being capable of measuring the intensity of the quantitatively detected radiation there at derived from said quantitatively detecting means, thereby permitting the evaluation of said Mueller matrix elements.

8. A method for obtaining values characteristic of a homogeneous sample of biological particles in static fluid suspension comprising the steps of:

a) producing collimated, high intensity substantially monochromatic radiation having a chosen wavelength and having substantial polarization along a first axis;

b) modulating said linearly polarized radiation to generate polarization modulated radiation having a first frequency;

c) permitting said modulated radiation to enter and interact with the sample to produce scattered radiation, said modulation step being the only modulation step before interaction with the sample;

d) polarizing said scattered radiation to produce a component of said scattered radiation having its polarization directed along a second axis;

e) quantitatively detecting said polarized scattered radiation;

f) processing the detected radiation to provide values each having a definite mathematical relationship substantially to a particular Mueller matrix element, said elements deriving from the interactions of the sample with the radiation and, when said elements are normalised by the intensity of the scattered radiation, containing information relating to the nature of the sample; characterised in that:

the modulation step includes retarding the received radiation, between 1/4 wavelength and 1/2 wavelength and generating elliptically polarized radiation;

a second modulation step is provided, including retarding the emitted radiation from the sample by between 1/4 wavelength and 1/2 wavelength and receiving a portion of said scattered radiation at a chosen angle and generating polarization modulation radiation having a second modulation frequency simultaneously impressed thereon, the second modulation step being the only such step after interaction with the sample;

the polarizing step polarizes the scattered radiation bearing the two polarization modulation frequencies;

normalizing the scattered radiation is achieved by fixing the retarding steps and the first and second axis such that the dc component of the scattered radiation is independent of polarization;

the quantitative detection step detects each individual frequency of a plurality of frequencies present in said radiation, said individual frequencies resulting from the effects of the two modulation steps on the radiation; and

the processing step processes each individual frequency of said plurality of frequencies present in said quantitatively detected radiation, providing eight independent matrix elements to be extracted.

9. The method as claimed in Claim 8, wherein the steps of the said method are repeated at a plurality of scattering angles.

10. The method as claimed in Claim 8 or 9, wherein the steps of the said method are repeated for a plurality of wavelengths.

11. The method as claimed in Claims 8, 9 and 10 wherein the step of correcting for substantial strain birefringence resulting from the performance of said step of allowing said first modulated elliptically polarized radiation to interact with said suspension producing said scattered radiation is added.

12. The method as claimed in Claim 8, 9, 10 or 11 wherein the step of comparing said measured Mueller matrix elements for said sample under investigation to a database of measured Mueller matrix elements for known samples is added, thereby permitting the identification of the sample under investigation to be achieved.

13. The method as claimed in Claim 8, 9, 10, 11 or 12 wherein the sample under investigation is a virus.

**Patentansprüche**

1. Vorrichtung zur Bestimmung von Werten, die charakteristisch für homogene Proben mit biologischen Partikeln in ruhender flüssiger Suspension sind, mit:

a) Mitteln (10, 12) zum Erzeugen von gerichteter hochintensiver im wesentlichen monochromatischer Strahlung mit einer ausgewählten Wellenlänge und im wesentlichen Polarisation längs ersten Achse;

b) einen Modulator (14), der die linear polarisierte Strahlung empfängt und polarisationsmodulierte Strahlung mit einer ersten Frequenz erzeugt;

c) Mitteln (16), die die Probe aufnehmen, die das Eindringen der modulierten Strahlung und die Wechselwirkung damit ermöglichen und die die dadurch gestreute Strahlung austreten lassen, wobei der Modulator der einzige Modulator vor den Aufnahmemitteln ist;

d) einen Polarisator (20), der die Streustrahlung empfängt und damit wechselwirkt eine eine Komponente der Streustrahlung mit einer Polarisationsrichtung längs einer zweiten Achse durchtreten zu lassen;

e) Mitteln (22) zum quantitativen Erfassen der Strahlung, die durch den Polarisator (20) geht;

f) Mitteln zum Verarbeiten der erfassten Strahlung, um Werte zu liefern, deren jeder eine definierte mathematische Beziehung im wesentlichen zu einem bestimmten Mueller-Matrix-Element besitzt, wobei sich diese Elemente von der Wechselwirkung der Probe mit der Strahlung herleiten und nachdem die Elemente durch die Intensität der Streustrahlung normalisisert worden sind, Informationen über die Art der Probe enthalten, dadurch gekennzeichnet, daß

der Modulator (14) eine Verzögerung zwischen einer viertel Wellenlänge und einer halben Wellenlänge der empfangenen Strahlung besitzt und zum Erzeugen elliptisch polarisierter Strahlung betreibbar ist;

ein zweiter Modulator (18) vorgesehen ist, der eine Verzögerung zwischen einer viertel Wellenlänge und einer halben Wellenlänge der von der Probe emittierten Strahlung besitzt, für den Empfang eines Teils der austretenden Streustrahlung bei einem bestimmten Winkel und zum daraus Erzeugen einer Polarisationsmodulationsstrahlung, die eine zweite Modulationsfrequenz aufweist, der simultan geprägt ist, wobei der zweite Modulator (18) der einzige Modulator hinter den Aufnahmemitteln (16) ist;

der Polarisator (20) ausgebildet ist, um die Streustrahlung zu empfangen, die die beiden Polarisationsmoduliertionsfrequenzen enthält;

die erste und die zweite Verzögerung und die erste und die zweite Achse so angeordnet sind, daß die Gleich-Komponente der Intensität der Streustrahlung unabhängig von der der Polarisation ist, um eine Normalisierung der Streustrahlung erreichen zu können;

die quantitativen Erfassungsmittel (22) empfindlich für jede individuelle Frequenz von mehreren von Frequenzen in der Strahlung sind, die den Polarisator passieren, wobei sich die individuellen Frequenzen aus der Einwirkung der beiden Modulatoren (14, 18) auf die Strahlung ergeben; und

die Mittel zur Vorbereitung Mittel enthalten, die jede individuelle Frequenz der mehreren Frequenzen verarbeiten, die in der quantitativ erfassten Strahlung vorhanden sind, um acht unabhängige Matrixelemente zu extrahieren.

2. Vorichtung nach Anspruch 1, bei der die Mittel, die die polarisierte monochromatische Strahlung erzeugen, einen Laser aufweisen.

3. Vorrichtung nach Anspruch 1, bei der die Mittel, die die polarisierte monochromatische Strahlung erzeugen, eine monochromatische Strahlungsquelle in Verbindung mit einem Polarisator aufweisen.

4. Vorrichtung nach Anspruch 2 oder 3, bei der zwischen den Mitteln, die die Probe aufnehmen und dem zweiten Modulator eine Viertelwellen-Platte eingeführt ist, wobei die austretende Steustrahlung diese passiert und damit vor dem Eintreten in den zweiten Modulator wechselwirkt, um so die Messung der $S_{23}$- und $S_{32}$-Mueller-Matrix-Elemente zu ermöglichen.

5. Vorrichtung nach den Ansprüchen 1, 2, 3 oder 4, bei der der erste Modulator (14) und der zweite Modulator photoelastische Modulatoren enthalten, wobei die photoelastischen Modulatoren sich sinusförmig veränderbare Verzögerungsamplituden bei der ersten bzw. der zweiten Frequenz aufweisen.

6. Vorrichtung nach den Ansprüchen 1, 2, 3, 4 oder 5, bei der die erste Verzögerung und die zweite Verzögerung jeweils so ausgewählt sind, daß sie 2,40483 Radian betragen.

7. Vorrichtung nach einem der Ansprüche 1 bis 6, bei der die Mittel zur Identifizierung und Messung der Intensität die einer individuellen Frequenz der mehreren Frequenzen zugeordnet sind, mindestens einen phasenempfindlichen Detektor aufweisen, wobei der mindestens eine phasenempfindliche Detektor seinerseits auf jede der individuellen Frequenzen abstimmbar und fähig ist, die Intensität der quantitativ erfassten Strahlung zu messen, die von den quantitativen Empfangsmitteln abgeleitet ist, um dadurch die Abschätzung der Mueller-Matrix-Elemente zu ermöglichen.

8. Verfahren zur Bestimmung von Werten, die charkateristisch für homogene Proben mit biologischen Partikeln in ruhender flüssiger Suspension sind, mit den folgenden Schritten:

a) Erzeugen gerichteter hoch intensiver im wesentlichen monochromatischer Strahlung mit einer ausgewählten Wellenlänge und einer wesentlichen Polarisation längs einer ersten Achse;

b) Modulieren der linear polarisierten Strahlung zur Erzeugung von polarisationsmodulierter Strahlung mit einer ersten Frequenz;

c) Ermöglichen, daß die modulierte Strahlung in die Probe eindringt und mit ihr wechselwirkt zur Erzeugung von Streustrahlung, wobei der Modulationsschritt der einzige Modulationsschritt vor den Wechselwirken mit der Probe ist;

d) Polarisieren der Streustrahlung, um eine Komponente der Streustrahlung zu erzeugen, die ihre Polarisation längs einer zweiten Achse gerichtet hat;

e) quantitatives Erfassen der polarisierten Streustrahlung;

f) Verarbeiten nachgewiesenen Strahlung, um Werte zu erreichen, deren jeder eine definierte mathematische Beziehung im wesentlichen zu einem bestimmtenen Mueller-Matrix-Element besitzt, wobei diese Elemente sich von der Wechselwirkung der Probe mit der Strahlung ableiten, nachdem die Elemente durch die Intensität der Streustrahlung normalisisert sind, Informationen über die Art der Probe enthalten, dadurch gekennzeichnet, daß

der Modulationsschritt eine Verzögerung zwischen einer viertel Wellenlänge und einer halben Wellenlänge der empfangenen Strahlung und ein Erzeugen elliptisch polarisierter Strahlung aufweist;

ein zweiter Modulationsschritt vorgesehen ist, der ein Verzögern der von der Probe emittierten Strahlung zwischen einer viertel Wellenlänge und einer halben Wellenlänge und ein Empfangen eines Teils der Streustrahlung bei einem bestimmten Winkel und ein daraus Erzeugen einer Polarisationsmodulationsstrahlung aufweist, die eine zweite Modulationsfrequenz simultan geprägt wird, wobei der zweite Modulationsschritt der einzige derartige Schritt nach der Wechselwirkung mit der Probe ist;

der Polarisationsschritt die Streustrahlung, die zwei Polarisationmodulationsfrequenzen enthält, polarisiert;

die Streustrahlung dadurch nomalisiert wird, daß die Verzögerungsschritte und die erste und zweite Achse so festgelegt werden, daß die Gleich-Komponente der Streustrahlung unabhängig von der Polarisation ist;

der quantitative Empfangsschritt jede individuelle Frequenz mehrerer Frequenzen in der Strahlung erfasst, wobei die individuellen Frequenzen sich durch der Wirkung der zwei Modulationsschritte auf die Strahlung ergeben; und

der Verarbeitungsschritt jede individuelle Frequenz der mehreren Frequenzen in der quantitativ erfassten Strahlung verarbeitet, um acht unabhängige Matrixelemente zu extrahieren.

9. Verfahren nach Anspruch 8, bei dem die Verfahrensschritte bei mehreren Streuwinkeln wiederholt werden.

10. Verfahren nach Anspruch 8 oder 9, bei dem die Verfahrensschritte bei mehreren Wellenlängen wiederholt werden.

11. Verfahren nach den Ansprüchen 8, 9 und 10, bei dem der Schritt der Korrektur hinsichtlich wesentlichener Spannungsdoppelbrechung aufgrund der Ausführung des Schrittes resultiert, durch den die erste modulierte elliptisch polarisierte Strahlung, mit der Suspension in Wechselwirkung treten kann, die die Streustrahlung erzeugt, zusätzlich durchgeführt wird.

12. Verfahren nach den Ansprüchen 8, 9, 10 oder 11, bei dem der Schritt des Vergleichens des gemessenen Mueller-Matrix-Elemente für die gerade untersuchte Probe mit einer Datenbanken gemessener Mueller-Matrix-Elemente von bekannten Proben zusätzlich durchgeführt wird, damit die Identifizierung der gerade untersuchten Pobe erreichbar ist.

13. Verfahren nach den Ansprüchen 8, 9, 10, 11 oder 12, bei dem die gerade untersuchte Probe ein Virus ist.

**Revendications**

1. Un appareillage pour obtenir des valeurs caractéristiques d'un échantillon homogène de particules biologiques en suspension statique dans un fluide, comprenant:

a) un moyen (10, 12) pour produire un rayonnement sensiblement monochromatique, d'intensité élevée, collimaté, de longueur d'onde choisie, et présentant une polarisation substantielle le long d'un premier axe;

b) un modulateur (14) pour recevoir ledit rayonnement polarisé linéairement et créer un rayonnement modulé en polarisation ayant une première fréquence;

c) un moyen (16) pour recevoir l'échantillon, permettant audit rayonnement modulé de pénétrer dans et d'interagir avec lui, et permettant au rayonnement dispersé de cette façon d'émerger, ledit modulateur étant le seul modulateur en amont dudit moyen récepteur;

d) un polariseur (20) pour recevoir ledit rayonnement dispersé et interagir avec lui pour transmettre une composante dudit rayonnement dispersé ayant sa polarisation dirigée le long d'un deuxième axe;

e) un moyen (22) pour détecter quantitativement ledit rayonnement transmis par ledit polariseur (20);

f) un moyen pour traiter le rayonnement détecté afin de fournir des valeurs ayant chacune une relation mathématique définie sensiblement par rapport à un élément particulier d'une matrice de Mueller, lesdits éléments étant issus de l'intéraction de l'échantillon avec le rayonnement et, lorsque lesdits éléments sont normalisés par l'intensité du rayonnement dispersé, contenant des informations relatives à la nature de l'échantillon; caractérisé par le fait que:

—le modulateur (14) a un retard entre 1/4 de longueur d'onde et 1/2 longueur d'onde du rayonnement reçu, est actionnable pour créer un rayonnement polarisé de façon elliptique;

—un deuxième modulateur (18) est prévu, ayant un retard entre 1/4 de longueur d'onde et 1/2 longueur d'onde du rayonnement émis par l'échantillon, pour recevoir une partie dudit rayonnement dispersé, émergeant, à un angle choisi, et pour créer un rayonnement de modulation de polarisation à partir de celle-ci, qui a une deuxième fréquence de modulation appliquée simultanément sur celui-ci, le deuxième modulateur (18) étant le seul modulateur en aval du moyen récepteur (16); le polariseur (20) est disposé pour recevoir un rayonnement dispersé portant les deux fréquences de modulation de polarisation;

—lesdits premier et deuxième retards et lesdits premier et deuxième axes sont tels que la composante de courant continu de l'intensité du rayonnement dispersé est indépendante de la polarisation de façon qu'une normalisation du rayonnement dispersé puisse être obtenue;

—le moyen (22) de détection quantitative étant sensible à chaque fréquence individuelle parmi une pluralité de fréquences présentes dans ledit rayonnement transmis par le polarisateur (20), lesdites fréquences individuelles résultant des effets des deux modulateurs (14, 18) sur le rayonnement; et

—le moyen de traitement comprenant un moyen pour traiter chaque fréquence individuelle de ladite pluralité de fréquences présentes dans ledit rayonnement détecte quantitativement, pour extraire huit éléments de matrice indépendants.

2. L'appareillage comme revendiqué à la revendication 1, dans lequel le moyen pour produire le rayonnement monochromatique polarisé comprend un laser.

3. L'appareillage comme revendiqué à la revendication 1, où le moyen pour produire le rayonnement monochromatique polarisé comprend une source de rayonnement monochromatique conjointement avec un polariseur.

4. L'appareillage comme revendiqué à la revendication 2 ou 3, dans lequel une lame quart d'onde est introduite entre ledit moyen pour recevoir l'échantillon et ledit deuxième modulateur, de sorte que ledit rayonnement dispersé émergeant la traverse et interagit avec elle avant de pénétrer dans ledit deuxième modulateur, permettant de cette façon à la mesure des éléments $S_{23}$ et $S_{32}$ de la matrice de Mueller d'être effectuée.

5. L'appareillage comme revendiqué à la revendication 1, 2, 3 ou 4, dans lequel le premier modulateur mentionné (14) et ledit deuxième modulateur comprennent des modulateurs photo-élastiques, lesdits modulateurs photo-élastiques ayant des amplitudes de retard variant de façon sinusoïdale respectivement à ladite première fréquence et à ladite deuxième fréquence.

6. L'appareillage comme revendiqué à la revendication 1, 2, 3, 4 ou 5, dans lequel ledit premier retard et ledit deuxième retard sont choisis chacun pour être de 2,40483 radians.

7. L'appareillage comme revendiqué à l'une quelconque des revendications 1 à 6, dans lequel ledit moyen pour identifier et mesurer l'intensité associée à chacune desdites fréquences individuelles de ladite pluralité de fréquences comprend au moins un détecteur sensible à la phase, ledit ou lesdits détecteurs sensibles à la phase étant accordables tour à tour sur chacune desdites fréquences individuelles et étant capables de mesurer l'intensité du rayonnement détecté quantitativement à cet endroit, issu dudit moyen de détection quantitative, permettant ainsi l'évaluation desdits éléments de la matrice de Mueller.

8. Un procédé pour obtenir des valeurs caractéristiques d'un échantillon homogène de particules biologiques en suspension statique dans un fluide, comprenant les étapes consistant à:

a) produire un rayonnement sensiblement monochromatique, d'intensité élevée, collimaté, d'une longueur d'onde choisie et présentant une polarisation substantielle le long d'un premier axe;

b) moduler ledit rayonnement polarisé linéairement pour créer un rayonnement modulé en polarisation ayant une première fréquence;

c) permettre audit rayonnement modulé de pénétrer dans et d'intéragir avec l'échantillon pour produire un rayonnement dispersé, ladite étape de modulation étant la seule étape de modulation avant l'intéraction avec l'échantillon;

d) polariser ledit rayonnement dispersé pour produire une composante dudit rayonnement dispersé ayant sa polarisation dirigée le long d'un deuxième axe;

e) détecter de façon quantitative ledit rayonnement dispersé, polarisé;

f) traiter le rayonnement détecté pour fournir des valeurs ayant chacune une relation mathématique définie sensiblement par rapport à un élément particulier d'une matrice de Mueller, lesdits éléments étant issus des interactions de l'échantillon avec le rayonnement et, lorsque lesdits éléments sont normalisés par l'intensité du rayonnement dispersé, contenant des informations relatives à la nature de l'échantillon; caractérisé en ce que:

—l'étape de modulation comprend l'opération consistant à retarder le rayonnement reçu, entre 1/4 de longueur d'onde et 1/2 longueur d'onde, et à créer un rayonnement polarisé de façon elliptique;

—une deuxième étape de modulation est prévue, comprenant l'opération consistant à retarder le rayonnement émis par l'échantillon d'une valeur comprise entre 1/4 de longueur d'onde et 1/2 longueur d'onde, et à recevoir une partie dudit rayonnement dispersé à un angle choisi et à créer un rayonnement à modulation de polarisation ayant une deuxième fréquence de modulation appliquée simultanément sur celui-ci, la deuxième étape de modulation étant la seule étape de ce type après l'interaction avec l'échantillon;

—l'étape de polarisation polarise le rayonnement dispersé portant les deux fréquences de modulation de polarisation;

—la normalisation du rayonnement dispersé est obtenue par fixation des étapes de création d'un retard et des premier et deuxième axes de sorte que la composante de courant continu du rayonnement dispersé soit indépendante de la polarisation;

—l'étape de détection quantitative détecte chaque fréquence individuelle d'une pluralité de fréquences présentes dans ledit rayonnement, lesdites fréquences individuelles résultant des effets des deux étapes de modulation sur le rayonnement; et

—l'étape de traitement traite chaque fréquence individuelle de ladite pluralité de fréquences présentes dans ledit rayonnement détecté quantitativement, fournissant huit éléments de matrice indépendante à être extraits.

9. Le procédé comme revendiqué à la revendication 8, dans lequel les étapes dudit procédé sont répétées à une pluralité d'angles de dispersion.

10. Le procédé comme revendiqué à la revendication 8 ou 9, dans lequel les étapes dudit procédé sont répétées pour une pluralité de longueurs d'onde.

11. Le procédé comme revendiqué aux revendications 8, 9 et 10, dans lequel est ajoutée l'étape de correction d'une biréfringence par compression substantielle, résultant de l'accomplissement de ladite étape consistant à permettre audit premier rayonnement polarisé de façon elliptique, modulé, d'intéragir avec ladite suspension produisant ledit rayonnement dispersé.

12. Le procédé comme revendiqué à la revendication 8, 9, 10 ou 11, dans lequel est ajoutée l'étape de comparaison desdits éléments de matrice de Mueller mesurés pour ledit échantillon soumis à l'étude dans une base de données d'éléments de matrice de Mueller mesurés pour des échantillons connus, permettant de cette façon l'identification de l'échantillon sousmis à l'étude d'être réalisée.

13. Le procédé comme revendiqué à la revendication 8, 9, 10, 11 ou 12, dans lequel l'échantillon soumis à l'étude est un virus.

LASER → POL1 → MOD(F1) → SAMPLE → MOD(F2) → POL2 → PMT →

10  12  14  16  18  20  21  22  24

θ

FIG. 1

FIG. 2

EP 0 190 628 B1

$$\begin{pmatrix} S_{11}(\ 0) & S_{12}(-) & S_{13}(100) & S_{14}(\ 50) \\ S_{21}(-) & S_{22}(-) & S_{23}(\ -\ ) & S_{24}(\ -\ ) \\ S_{31}(94) & S_{32}(-) & S_{33}(\ \ 6) & S_{34}(\ 44) \\ S_{41}(\ 4) & S_{42}(-) & S_{43}(\ 53) & S_{44}(\ 97) \end{pmatrix}$$

FIG. 3

FIG. 4

EP 0 190 628 B1

FIG. 5